# EUROPEAN PATENT SPECIFICATION

(11) **EP 1 539 427 B1**
(45) Date of publication and mention of the grant of the patent: **04.06.2014**
(21) Application number: 03763296.5
(22) Date of filing: 07.07.2003
(51) Int. Cl.: B25B 1/24, B23Q 1/03

(54) **LOCKING SUPPORT FIXTURE**
VERRIEGELUNGSHALTEVORRICHTUNGEN
MONTAGE DE SUPPORT A BLOCAGE

(30) Priority: 08.07.2002 US 394536 P; 26.11.2002 WO PCT/US02/38203
(43) Date of publication of application: 15.06.2005
(73) Proprietor: DTG International GmbH, 8005 Zürich (CH)
(72) Inventor: MONCAVAGE, Charles, Nazareth, PA 18064 (US)
(74) Representative: Boden, Keith McMurray
(86) International application number: PCT/US2003/021222
(87) International publication number: WO 2004/004979

(56) References cited:
- EP-A2- 0 899 061
- WO-A1-02/36308
- US-A- 4 088 312
- US-A- 4 684 113
- US-A- 5 546 784
- US-A- 5 551 677
- US-A- 5 915 679

## Description

### FIELD OF THE INVENTION

The present invention relates generally to support fixtures and more specifically to compliant locking support fixtures.

### DESCRIPTION OF THE RELATED ART

Support fixtures for propping up workpieces have been widely used in the production of contoured parts from such varying applications as aircraft manufacturing, medical operations and circuit board manufacturing. Regardless of the workpiece, it is important to be able to hold the piece so that machining or further treatment operations can be performed. Generally, support fixtures for holding articles comprise a device containing vertically disposed adjustable pins or rods and means for securing the pins at a given vertical location. Exemplary support fixtures are described in U.S. Patent Nos. 4,200,272 to Godding, 4,684,113 to Douglas et al., 5,722,646 to Soderberg et al., and 5,984,293 to Abrahamson et al.

U.S. Patent No. 4,200,272 to Godding discloses a work holder comprising a flat horizontal table in which is mounted a two-dimensional array of vertically disposed spaced-apart rods which protrude upwards through the surface. The rods can be moved upwards individually, either manually or by springs or by fluid pressure means such as rams, and then clamped in position so that their tips form a cradle conforming to the shape of the workpiece, in which the workpieces rests.

U.S. Patent No. 4,684,113 to Douglas et al. discloses a holding fixture which has a contoured holding surface. The fixture includes a plurality of workpiece engaging rods which are individually adjustable in height. A holding force is generated through the rods to hold the workpiece to the fixture.

U.S. Patent No. 5,722,646 to Soderberg et al. discloses a tooling system having a support table with multiple openings adapted to removably accept a self-contained actuator. Each opening of the support table provides vacuum and air supply lines as well as a bus interface so that each position may be uniquely addressed and commanded separately from any other openings. The self-contained actuator has corresponding connectors for receiving the vacuum and air supply as well as for interfacing with the bus. An actuator may be placed at a particular location by insertion into the receptacle at the opening in the support table aperture. The actuator may be commanded to raise, lower, lock in position and supply vacuum separate from any other actuator.

U.S. Patent No. 5,984,293 to Abrahamson et al. discloses a fixture for holding printed circuit board assemblies during stencil printing, pick-and-place processing, and other PCB assembly processes. The fixture has a base and a plurality of support members movably attached to the base. The support members may project away from the base along support paths, and the support members are selectively positionable along the support paths when the support members engage a side of a printed circuit board assembly. The support members may be selectively positioned at heights corresponding to a topography of the side of the printed circuit board assembly to uniformly support the printed circuit board assembly.

Some problems with the prior art support fixtures include substantial set-up time, the requirement of expensive or sophisticated controls, and the inability to perform tasks on objects not accessible by manual means such as when in a hazardous or sterile environment. Another significant problem with the above described support fixture is the requirement for operator intervention to set or reset the pins to conform to each new workpiece. A support fixture is desired which is inexpensive and simple to employ and significantly reduces or eliminates set-up time and operator intervention.

WO 02/36308 A discloses a pin locking apparatus for use in a support fixture which includes a locking plate having a pin receiving hole and a ball receiving hole, and a ball contained within the ball receiving hole. The bottom of the ball receiving hole merges with a lower portion of the pin receiving hole, and in a locking position the ball of the pin locking apparatus is positioned approximately at the bottom of the ball receiving hole, and in an unlocking position the ball is remote from the bottom of the ball receiving hole.

### SUMMARY OF THE INVENTION

According to one embodiment, a pin locking apparatus as per claim 1 includes a housing, at least one pin and at least one locking piston. The housing includes at least one locking bore and at least one pin bore. The at least one pin is slidably contained within the pin bore and is positioned by application of pressure in the pin bore. The at least one locking piston is slidably contained within the locking bore and is actuated by pressure in the locking bore to apply a locking force on the pin.

Another aspect is a method as per claim 33. The steps include applying a first fluid pressure to raise a pin to a desired position and applying a second fluid pressure to move a locking piston so that it engages and locks the pin at the desired location.

### BRIEF DESCRIPTION OF THE DRAWINGS

FIG. 1 is a cross-sectional view of a pin locking apparatus according to one embodiment.
FIGS. 2A-2E are schematic cross-sectional views of a pin locking apparatus depicting the steps of locking and unlocking pins.
FIG. 3 is a partial cross-sectional view of a pin locking apparatus according to a second embodiment.
FIG. 4 is a partial cross-sectional view of a pin locking apparatus according to third embodiment.
FIG. 5 is cross-sectional view of a pin locking apparatus according to a fourth embodiment.
FIG. 6 is a view of two pin locking apparatuses in cross-section shown employed with a workpiece.
FIG. 7 is a flow chart diagram showing the process steps according to one exemplary embodiment.
FIG. 8 is a schematic of pin locking system according to an exemplary embodiment.

### DETAILED DESCRIPTION OF THE PREFERRED EMBODIMENT

This description of embodiments is intended to be read in connection with the accompanying drawing(s), which are to be considered part of the entire written description of this invention. In the description, relative terms such as horizontal." "vertical," "up," "down," "top", "bottom", "front", "back", "forward", and "rearward", as well as derivatives thereof (e.g., "horizontally," "downwardly," "upwardly," etc.) should be construed to refer to the orientation as then described or as shown in the drawing figure under discussion. These relative terms are for convenience of description and normally are not intended to require a particular orientation.

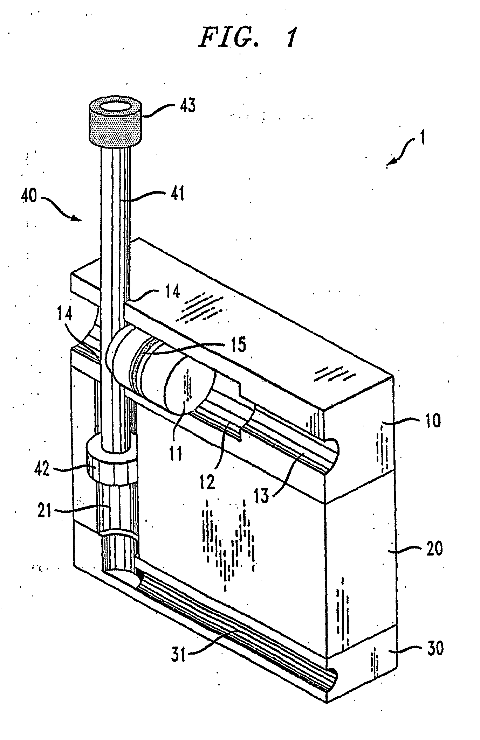

FIG. 1 shows a portion of an exemplary pin locking apparatus **1.** Pin locking apparatus **1** has a housing **100,** pin **40** and locking piston **11.** Housing **100** includes lock plate **10,** cylinder block **20,** and base plate **30.** Although shown as separate pieces assembled together, two or more of the preceding elements may be formed from a single piece of material. Lock plate **10** includes locking piston **11** a locking bore **12,** a pin locking channel **13,** and a pin opening **14.** Preferably, locking bore **12** is a horizontally bored hole, which movably retains the locking piston **11.** Preferably, locking piston **11** includes an o-ring **15.** The pin locking channel **13** is preferably also a horizontally bored hole, which is fluidly connected to the locking bore **12** and preferably has a smaller diameter than the locking bore. (As an alternative to having a separate reduced-diameter pin locking channel, the pin locking apparatus may have an extended constant-diameter locking bore **12** which can additionally perform the functions of the pin locking channel (i.e., fluidly connecting one side of the locking bore **12** to a source of pressurized fluid or vacuum). Where a locking bore **12** with only a single diameter is employed, preferably the pin locking apparatus has a means for restricting movement of the locking piston, such as a stop adjacent to the locking bore or projecting from a side wall of the locking bore.) The pin locking channel **13** is fluidly connected to a pneumatic device for delivery of fluid pressure (preferably air pressure) or vacuum to allow the locking piston **11** to engage or disengage a shaft **41.** The pin opening **14** is sized to guide a shaft **41** of the pin **40** as it is extended and retracted in the pin locking apparatus **1.** Pin opening **14** should be smaller in diameter than a piston **42** of the pin **40** to ensure that the pin **40** is retained within the pin locking apparatus 1 when pressure is applied to raise the pins **40.** Preferably, lock plate **10** is formed of aluminum, but may be made of any suitable material.

Cylinder block **20** includes a pin bore **21.** Pin bore **21** is a vertically bored hole for slidably engaging a piston **42** of the pin **40.** Pin bore **21** is fluidly connected to a pin adjustment channel **31** of base plate **30.** The diameter of the pin bore **21** corresponds to the diameter of piston **42** and is preferably sized so that some amount of air may pass by the piston **42.** Preferably, cylinder block **20** is made of aluminum, but may be made of any suitable material.

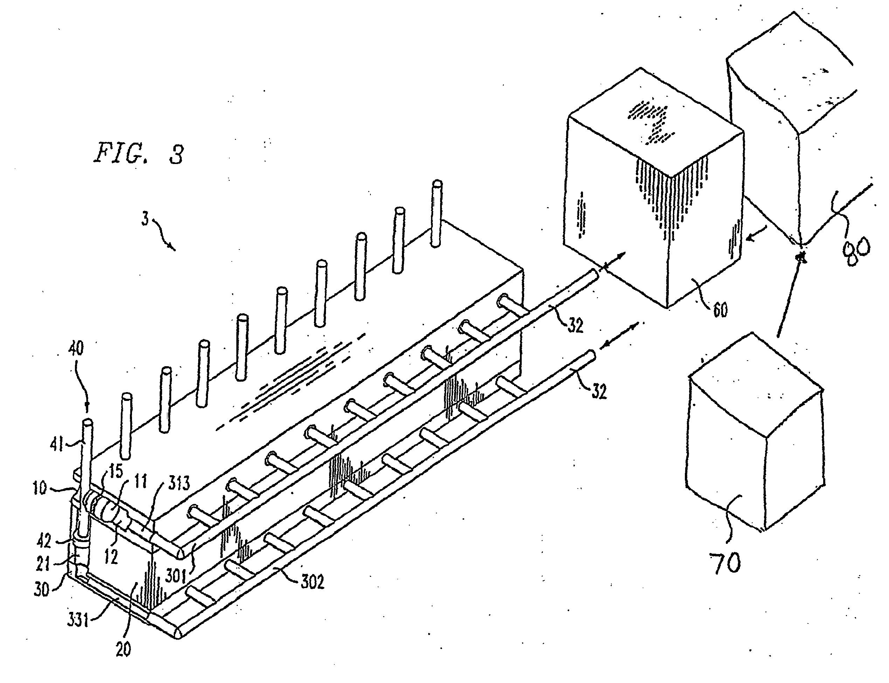

Base plate **30** includes a pin adjustment channel **31** for delivering air pressure and vacuum to the pin bore **21** of the cylinder block **20.** Preferably, pin adjustment channel **31** is a horizontally bored hole. The pin adjustment channel **31** is fluidly connected to a pneumatic device **60** (see FIG. 3) for delivery of air pressure or vacuum to extend or retract a shaft **41.** (Alternatively, or in addition to the use of air pressure to extend the shaft, the shaft may be extended by spring force.) Preferably, base plate **30** is made of aluminum, but may be made of any suitable material.

Pin **40** includes a shaft **41** and a piston **42.** Shaft 41 is slidably received in pin opening **14.** Preferably, shaft **41** includes a cap **43** made of a soft, resilient or deformable material, such as plastic or a complaint rubber material, for supporting an object, especially in applications where there is a chance of marking or otherwise damaging a workpiece. Pin 40 may consist of one piece with a different diameter for shaft **41** and piston **42,** or two separate pieces that are mated together. Pin **40** is preferably made from a hard material such as steel so that it is not damaged by the locking piston **50** being wedged against it. The material should also preferably be rigid so that it provides adequate support to a workpiece **50.**

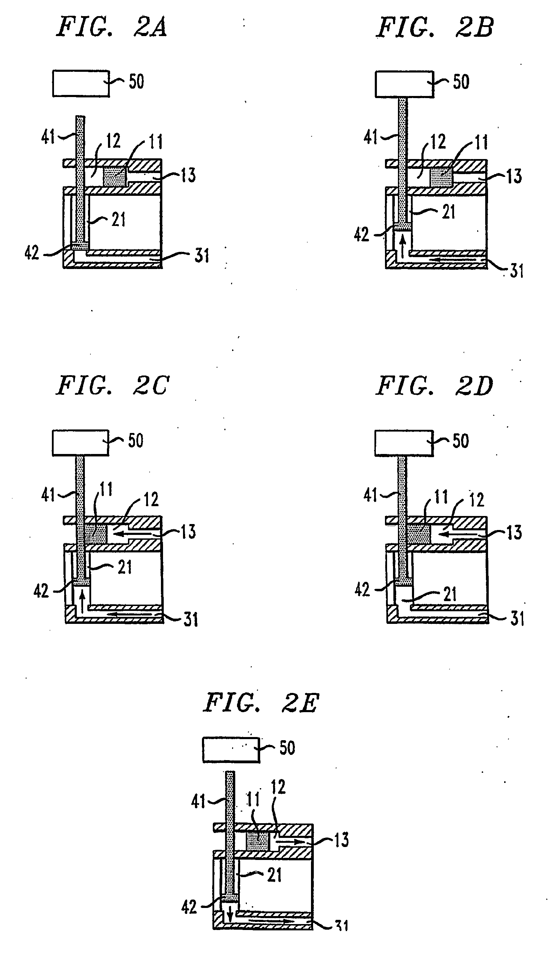

Referring to FIGS. 2A - 2E, the steps of positioning a shaft **41** to a desired location to support a workpiece and resetting the shaft **41** are illustrated. FIG. 2A shows the pin. locking apparatus **1** in an unlocked (or reset) position. FIG. 2B illustrates the step of applying air pressure via the pin adjustment channel **31** to extend the pin **40** until the shaft **41** engages a workpiece **50** upon which a task is to be performed. (As stated above, the pin may also be extended by spring force.) Preferably air pressure is applied using a pneumatic device **60,** such as an air compressor. The pressure is preferably just enough to raise the pin **40** lightly until the shaft **41** contacts the surface of the workpiece to be supported.

FIG. 2C illustrates the step of applying air pressure via the pin locking channel **13** to move a locking piston **11** so that it engages and locks the shaft 41 of a pin **40** at the desired location. Air pressure continues to be applied via the pin adjustment channel **13** at least until the shaft **41** is locked by engagement by the locking piston **11.** Preferably air pressure applied to the move the locking piston **11** is also applied using a pneumatic device **60,** such as an air compressor. A single pneumatic device may supply air pressure to both air channels **13, 31** or separate pneumatic devices may be employed.

FIG. 2D illustrates the step of removing the air pressure applied to raise the pin **40.** The shaft **41** remains locked at the desired position by the frictional engagement of the locking piston **11.** Preferably, the air pressure applied via the pin locking channel **13** is maintained until the task being performed on the workpiece is completed. For supporting light or delicate objects, where less force is required, the frictional force can be regulated by adjusting the air pressure being applied to the locking piston **11.**

FIG. 2E illustrates the step of disengaging the locking piston **11** from the shaft **41** to reset the pin locking apparatus **1** for a different operation. To disengage the shaft **41,** vacuum is applied via the pin locking channel **13** to move the locking piston **11** in the locking bore **12** away from shaft **41.** Preferably vacuum is applied using a pneumatic device **60,** such as a vacuum pump. A single pneumatic device may supply both vacuum and air pressure to the air channels **13, 31,** or separate pneumatic devices may be employed. Preferably, while vacuum is applied to the pin locking channel **13,** vacuum is also being applied to the pin adjustment channel **31** to aid in retracting the pin **40** from its heightened position. However, in certain circumstances, vacuum to the pin adjustment channel **31** may not be necessary, since gravity may act to retract the pin **40.** Once the locking piston **11** has been disengaged and the shaft **41** has been retracted, the vacuum may be removed from the air channels **13, 31.** The pin locking apparatus 1 is then reset and ready for use with a different workpiece.

As stated above, one or more pneumatic devices **60** may be employed to supply air pressure and vacuum to the pin locking apparatus **1.** In one preferred embodiment, the pneumatic device **60,** and therefore the setting and resetting (or locking and unlocking) of the pin locking apparatus **1,** is controlled by a controller **80** (See FIG. 3), such as a computer, which automatically and sequentially controls the device. The controller **80** preferably contains the logic and switching devices which orchestrates the sequence of operations of any employed pin locking apparatus 1, 3, 4, 5, 96. The pneumatic device **60** may also be controlled manually.

Referring to FIG. 3, a pin locking system **90** is shown, wherein the pin locking apparatus 3 (or the pneumatic device **60** that operates the pin locking apparatus) may be triggered to set or reset the pins by one or more host machine devices **70** that are involved in the assembly of the workpiece being manufactured. For example, where circuit boards are being manufactured, for example, the pin locking apparatus 3 or pneumatic device **60** may be triggered to set, unlock and/or reset the pins by devices such as a solder paste printer, a pick and place machine, a C & C milling machine, a board clamp device, and/or a drill press, or any other machine or assembly device performing an operation on the workpiece. One or more of these devices provide a signal to the pin locking apparatus **3,** either directly or through the pneumatic device **60** or controller **80,** for example, to trigger the setting, unlocking and/or resetting of the pins. The employment of the host machine device **70** may advantageously allow the system **90** to automatically reset for each workpiece without any need for operator intervention.

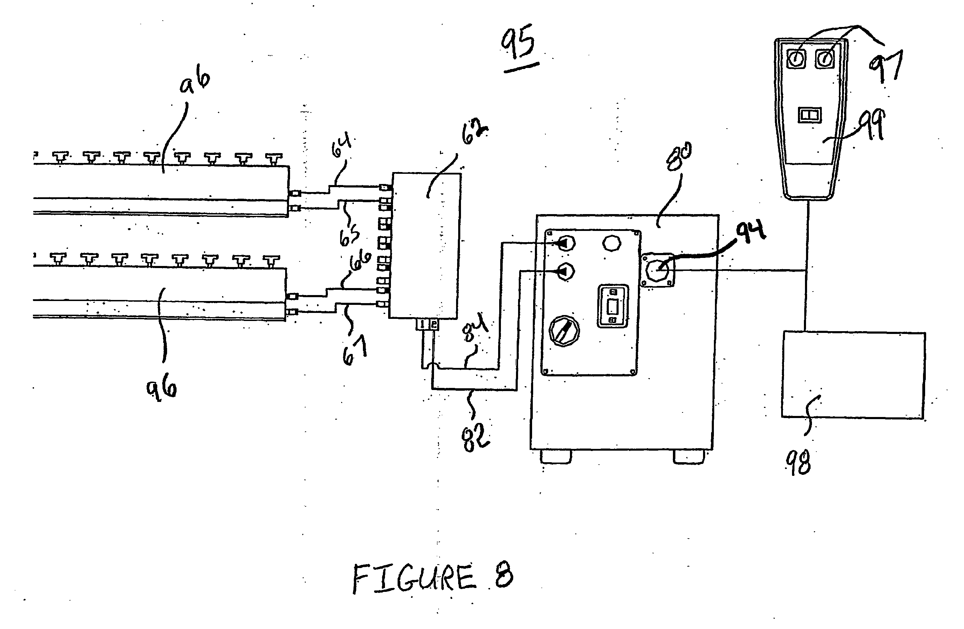

Referring to FIG. 8, a schematic of an embodiment of a pin locking system **95** is shown, including at least one pin locking apparatus **96,** a distribution manifold **62,** a controller **80,** and a sensing mechanism **98.** The pin locking system also preferably includes a pneumatic device (not shown) which is connected to the controller 80, or, alternatively, is integral with the controller **80.** Preferably, the controller **80** includes two lines **82, 84** for controlling the air pressure and vacuum to the pin locking apparatuses **96,** which are preferably connected to the distribution manifold **62** (or alternatively may be connected directly to the pin locking apparatuses 96). The distribution manifold **62** can divide the air pressure and vacuum from the lines **82, 84** of the controller **80** into a plurality of lines **64, 65, 66, 67** to support a plurality of pin locking apparatuses **96.**

Alternatively, or in addition to, the sensing mechanism **98,** the pin locking system **95** may include a manual input device **99.** The sensing mechanism 98, which triggers the pin locking apparatus **96** to set, unlock, and/or reset the pins, may be, for example, an optical sensing device or a pressure sensor, but may include a variety of other sensing devices. The controller **80** preferably includes a plug **94** or other input means into which the sensing mechanism **98** is connected. The sensing mechanism **98** (such as an optical sensor or pressure sensor) may operate by sensing the presence of a workpiece at the location of the pin locking apparatus **96,** thereby signaling the controller **80** to automatically reset (lift and lock) the pins. The sensing mechanism could likewise sense the absence of the workpiece, such as when it has left the pin locking apparatus **96,** and thereby signal the controller **80** to unlock and lower the pins to prepare for a subsequent workpiece. The sensing mechanism may advantageously allow the system **95** to automatically reset for each workpiece without any need for operator intervention.

The manual input device **99**, which also operates to trigger the pin locking apparatus, may be, for example, a mechanism which has buttons **97** (e.g., "up" and "down" buttons) or switches for allowing an operator to set (lift) or unlock (lower) the pins. The controller **80** preferably includes a plug **94** or other input means into which the manual input device **99** is connected. This use of a manual input device **99** may advantageously allow an operator to choose when to reset the pin locking apparatus **96** as opposed to having it automatically reset to each workpiece.

FIGS. 3-5 show other embodiments of a pin locking apparatus, each including a plurality of pins **40,** a plurality of locking pistons **11,** and a housing **300, 400, 500** including a plurality of locking bores **12** that movably contain respective locking pistons **11,** a plurality of pin bores **21** each capable of movably containing a respective pin **40,** a pin locking channel **313, 413, 513** fluidly connected to each locking bore **12,** and a pin adjustment channel **331, 431, 531** fluidly connected to each pin bore **21.** Preferably the locking pistons **11,** locking bores **12** and pin locking channel **313, 413, 513** are contained within a lock plate **10,** the pin bores **12** are contained within a cylinder block **20** and the pin adjustment channel **331, 431, 531** is contained within a bottom plate **30.** Further, these pin locking apparatuses **3, 4, 5** preferably also include an o-ring **15** on each locking piston 50, and air connection means, such as connection ports **32,** for connecting the pin locking channel and pin adjustment channel to a pneumatic device **60.** Preferably the pins **40** and corresponding pin bores **21** are arranged in one or more rows. The number of rows and pins, as well as the spacing between pins, can be varied depending on the size and make-up of the workpiece. The pin locking apparatuses **3, 4, 5** may further include one or more pneumatic devices **60** for supplying air pressure or vacuum to such apparatuses. The method of setting and resetting (or locking and unlocking) the pins of these pin locking apparatuses is essentially the same as that described above with respect to the embodiment of FIG. 1.

Referring to FIG. 3, a pin locking apparatus **3** is shown wherein the locking plate **10** of housing **300** has a plurality of pin locking channels **313** and the base plate **30** has a plurality of pin adjustment channels **331.** Pin locking apparatus **3** includes a first and second external air conduit **301, 302.** The first external air conduit **301** is fluidly connected to each pin locking channel **313.** The second external air conduit **302** is fluidly connected to each pin adjustment channel **331.** The first and second external air conduits **301, 302** preferably include an air connection means, such as connection ports **32,** for connecting the external air conduits to a pneumatic device **60.**

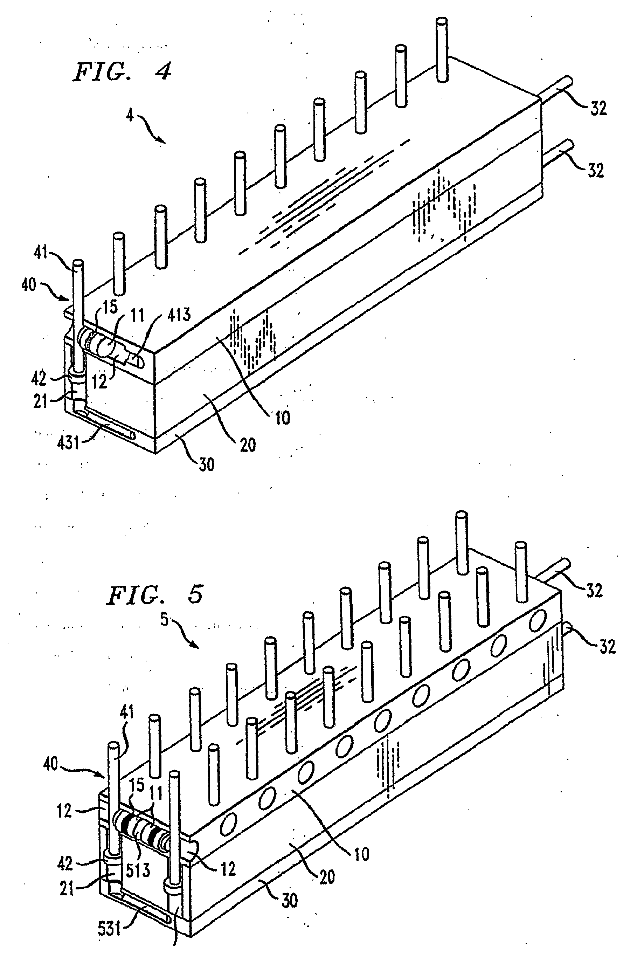

Referring to FIG. 4, another embodiment of the invention is shown that is similar to the embodiment of FIG. 3, except that rather than having a portion of the air flow means of the pin locking apparatus 4 plumbed externally, the means of air flow is essentially completely internal. The single pin locking channel **413** is enclosed within the lock plate **10** of housing **400** and branches to fluidly connect to each locking bore **12.** Likewise, the single pin adjustment channel **431** is enclosed within the base plate **30** and branches to fluidly connect to each pin bore **21.** Preferably, the pin locking apparatus **4** includes an air connection means, such as connection ports 32, for fluidly connecting the air channels **413, 431** to a pneumatic device 60.

Referring to FIG. 5, another embodiment of the invention is shown wherein the pin locking apparatus 5 includes at least two rows of pins **40** with opposing and aligned locking pistons **11.** As can be understood from FIG. 5, a single pin locking channel **513** in housing **500** is fluidly connected to the locking bores **12** that movably contain the locking pistons **11,** which in turn engage the respective shafts **41** in the two aligned rows of pins **40.** Likewise, a single pin adjustment channel **531** is fluidly connected to each pin bore **21** which movably retain the pistons **42** in the two aligned rows of pins **40.** Preferably, the pin locking apparatus **5** includes an air connection means, such as connection ports **32,** for fluidly connecting the air channels **513, 531** to a pneumatic device **60.**

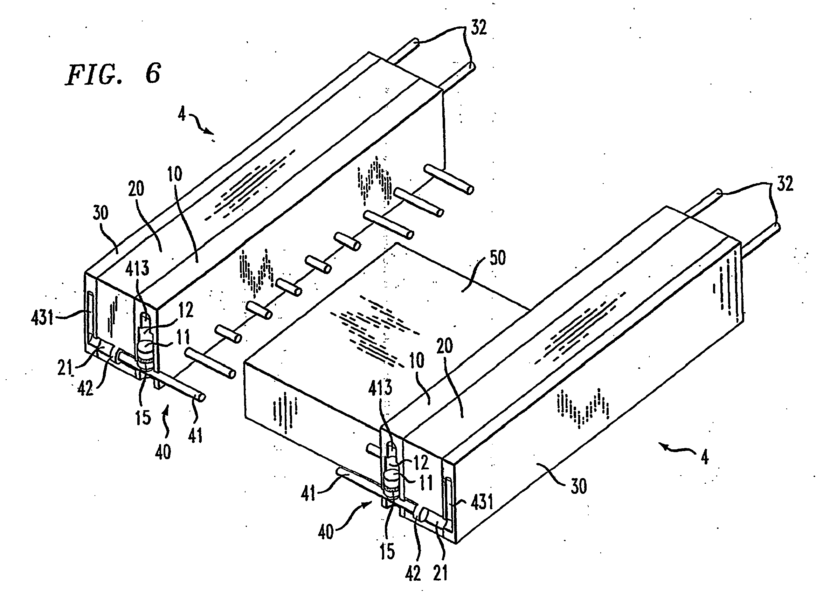

FIG. 6 illustrates two pin locking apparatuses **4** employed in conjunction with each other to grip or lift a workpiece **50.** Although illustrated using the embodiment shown in FIG. 4, the embodiments of FIGS. 3 or 5 may be used, as well as other embodiments using two or more rows of pins.

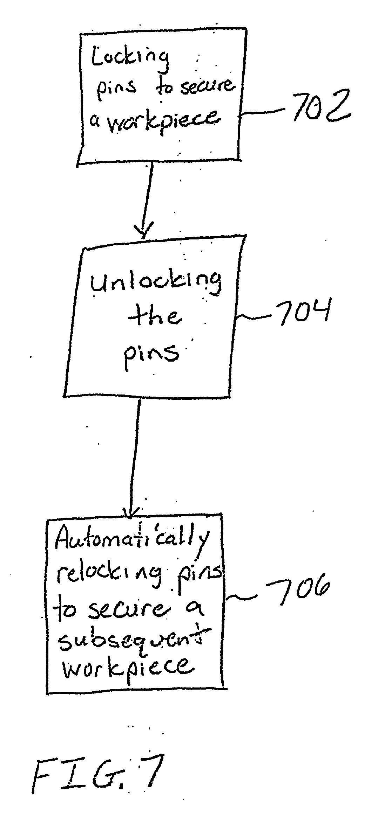

Referring to FIG. 7, a method.of operating a pin locking apparatus for' manufacturing workpieces according to one embodiment includes locking (or setting) **702** the pins of a pin locking apparatus to secure a first workpiece, unlocking **704** the pins of the pin locking apparatus, and automatically relocking (or resetting) **706** the pins of the pin locking apparatus to secure a second or subsequent workpiece. Preferably, the initial locking or setting. of the pins and the unlocking of the pins are also performed automatically. Preferably these steps occur without any operator intervention. Also preferably, the step of relocking occurs no more than three seconds after the pins are unlocked. However, the step of relocking may occur more than three seconds after the pins are unlocked, but preferably occurs within an amount of time that does not interfere with the normal operation of any machine that is being employed to assemble the workpiece. This automatic relocking ability advantageously allows the pin locking apparatus to quickly reconform to a subsequent workpiece or any number of subsequent workpieces having a structural difference from the previous workpiece that was secured by the pin locking apparatus. This is especially beneficial in the manufacture of circuit boards where slight deviations are often present between individual circuit boards and readjustment of the support fixture is beneficial for maintaining circuit boards of good quality. Current support fixtures either fail to compensate for deviations in subsequent workpieces or require operator intervention between subsequent workpieces to reset the support fixture to conform to each subsequent workpiece.

Although the invention has been described in terms of exemplary embodiments, it is not limited thereto. For example, although shown in the figures as including one or two rows of pins per pin locking apparatus, the pin locking apparatus may contain any number of rows, which may contain pins that are aligned or unaligned, and have various spacing or distances between the pins.

## Claims

1. A pin locking apparatus, comprising:
a housing having at least one pin bore (21), the at least one pin bore (21) having an inner end and an outer end, at least one pin opening (14) fluidly connected to the outer end of the at least one pin bore (21) and having a smaller size than the at least one pin bore (21), at least one pin adjustment channel (31; 331; 431; 531) fluidly connected to the inner end of the at least one pin bore (21), at least one locking bore (12), and at least one pin locking channel (13; 313; 413; 513) fluidly connected to the at least one locking bore (12);
at least one pin (40) comprising a piston (42) and a shaft (41), the piston (42) being slideably contained within the at least one pin bore (21) and the shaft (41) being slideably received in the respective pin opening (14) to be extendable from the pin opening (14) by application of a pneumatic pressure in the at least one pin adjustment channel (31; 331; 431; 531); and
at least one locking piston (11) slidably contained within the at least one locking bore (12) and actuated by a pneumatic pressure in the at least one locking bore (12) to apply a locking force on the at least one pin (40);
wherein the at least one locking piston (11), the at least one locking bore (12) and the at least one pin locking channel (13; 313; 413; 513) are contained in a locking plate (10) which includes the at least one pin opening (14) aligned with the at least one pin bore (21).

2. The apparatus of claim 1, wherein the at least one pin bore (21) is contained within a cylinder block (20).

3. The apparatus of claim 1, wherein the at least one pin adjustment channel (31; 331; 431; 531) is contained within a bottom plate (30).

4. The apparatus of claim 1, wherein the at least one pin bore (21) is contained within a cylinder block (20), and the at least one pin adjustment channel (31; 331; 431; 531) is contained within a bottom plate (30).

5. The apparatus of claim 4, wherein the locking plate (10), the cylinder block (20) and the bottom plate (30) are separate pieces that are assembled together.

6. The apparatus of claim 4, wherein the locking plate (10), the cylinder block (20) and the bottom plate (30) are formed from a single piece of material.

7. The apparatus of claim 1, wherein the at least one locking piston (11) includes an o-ring seal (15).

8. The apparatus of claim 1, wherein the piston (42) has a greater diameter than the shaft (41).

9. The apparatus of claim 1, wherein the at least one pin (40) has a cap (43) made of a material softer than the shaft (41).

10. The apparatus of claim 1, wherein the at least one locking piston (11) has a locking position for locking the at least one pin (40) at a desired height and an unlocking position, and the at least one locking piston (11) engages the at least one pin (40) in the locking position and is remote from the at least one pin (40) in the unlocking position.

11. The apparatus of claim 1, wherein the housing has a plurality of locking bores (12) that include the at least one locking bore (12), and a plurality of pin bores (21) that include the at least one pin bore (21), and comprising:
a plurality of pins (40) slideably contained within respective ones of the plurality of pin bores (21), each pin (40) positioned by application of a pneumatic pressure in the corresponding pin bore (21); and
a plurality of locking pistons (11), each slideably contained within a respective locking bore (12), each locking piston (11) being actuated by a pneumatic pressure in the corresponding locking bore (12) to apply a locking force on the corresponding pin (40) in that locking bore (12).

12. The apparatus of claim 11, wherein the at least one pin locking channel (13; 313; 413; 513) is fluidly connected to apply pressure or vacuum to the locking bores (12), and the at least one pin adjustment channel (31; 331; 431; 531) is fluidly connected to apply pressure or vacuum to the pin bores (21).

13. The apparatus of claim 12, further comprising:
a first external air conduit (301) fluidly connected to each pin locking channel (313) and a second external air conduit (302) fluidly connected to each pin adjustment channel (331).

14. The apparatus of claim 12, wherein the at least one pin locking channel (413; 513) and the at least one pin adjustment channel (431; 531) are enclosed within the pin locking apparatus.

15. The apparatus of claim T4, wherein the at least one pin locking channel (413) is enclosed within a locking plate (10), and the at least one pin adjustment channel (431) is enclosed within a base plate (30).

16. The apparatus of claim 12, further comprising:
air connection means (32) for connecting the at least one pin locking channel (13; 313; 413; 513) to a pneumatic device.

17. The apparatus of claim 14, wherein the pin locking apparatus includes at least two rows of pins (40) with opposing locking pistons (11).

18. The apparatus of claim 12, further comprising:
a pneumatic device (60), wherein the pneumatic device (60) is fluidly connected to one or both of the at least one pin locking channel (13; 313; 413; 513) and the at least one pin adjustment channel (31; 331; 431; 531).

19. The apparatus of claim 18, wherein the pneumatic device (60) provides one or both of pressure and vacuum to one or both of the at least one pin locking channel (13; 313; 413; 513) and the at least one pin adjustment channel (31; 331; 431; 531) for locking and unlocking the locking pistons (11).

20. The apparatus of claim 12, further comprising:
first and second pneumatic devices (60), the first pneumatic device (60) being fluidly connected to the at least one pin locking channel (13; 313; 413; 513) and the second pneumatic device (60) being fluidly connected to the at least one pin adjustment channel (31; 331; 431; 531).

21. The apparatus of claim 19, wherein the pneumatic device (60) is controlled by a programmable controller (80).

22. The apparatus of claim 19, wherein the pneumatic device (60) is controlled manually.

23. A system for setting, unlocking and/or resetting pins (40) of at least one pin locking apparatus (96) for use in manufacturing a workpiece, comprising:
at least one pin locking apparatus (96) of any of claims 1 to 22; and
a host machine that provides a signal to the at least one pin locking apparatus (96) to facilitate the automatic setting and resetting of the pins (40) of the at least one pin locking apparatus (96).

24. The system of claim 23, wherein the signal from the host machine is provided to the at least one pin locking apparatus (96) via a controller (80).

25. The system of claim 23, wherein the signal from the host machine is provided to the at least one pin locking apparatus (96) via a programmable controller (80).

26. The system of claim 23, wherein the workpiece is a circuit board and the host machine is a solder paste printer, a pick and place machine, a milling machine, a board clamp device or a drill press.

27. The system of claim 23, further comprising:
a workpiece supported by the pins (40) of the at least one pin locking apparatus (96); and
wherein the pins (40) of the at least one pin locking apparatus (96) conformably support the workpiece.

28. A system for setting, unlocking and/or resetting pins (40) of at least one pin locking apparatus (96) for use in manufacturing a workpiece, comprising:
at least one pin locking apparatus (96) of any of claims 1 to 22; and
a controller (80) which is capable of automatically setting and resetting the pins (40) of the at least one pin locking apparatus (96).

29. The system of claim 28, further comprising:
a sensing mechanism (98), wherein the sensing mechanism (98) triggers the controller (80) to set, unlock and/or reset the pins (40).

30. The system of claim 29, wherein the sensing mechanism (98) is one or more of an optical sensor or a pressure sensor.

31. The system of claim 28, further comprising:
a manual input device (99), wherein the manual input device (99) triggers the controller (80) to set, unlock and/or reset the pins (40).

32. The system of claim 28, further comprising:
a pneumatic device which is connected to the controller (80).

33. A method of positioning, locking, unlocking and resetting pins (40) of at least one pin locking apparatus (96) of any of claims 1 to 22, comprising the steps of:
applying a first fluid pressure to raise pins (40) of at least one pin locking apparatus (96) from a starting position to a desired position to support a first workpiece at a desired position;
**characterized by**:
applying a pneumatic pressure to move locking pistons (11) that engage and lock the pins (40) at the desired position;
performing a task on the supported first workpiece; and
maintaining the pneumatic pressure applied to the locking pistons (11) until the task performed on the first workpiece is completed.

34. The method of claim 33, comprising the steps of:
applying pressure to raise and vacuum to retract the pins (40) through pin adjustment channels (31; 331; 431; 531); and
applying pressure to move and vacuum to disengage the locking pistons (11) through pin locking channels (13; 313; 413; 513).

35. The method of claim 34, wherein each step is performed by a pneumatic device (60).

36. The method of claim 35, wherein the pneumatic device (60) is automatically controlled via a programmable controller (80).

37. The method of claim 35, wherein the pneumatic device (60) is controlled manually.

38. The method of claim 33, wherein, the step of applying a pneumatic pressure to move the locking pistons (11) locks the pins (40) to secure the first workpiece, and further comprising the steps of:
unlocking the pins (40), while in the desired position;
returning the pins (40) to the starting position;
resetting the pins (40) to secure a second workpiece; and
automatically relocking the pins (40) to secure the second workpiece, wherein the pins (40) are resettable in a different configuration in the resetting step than the pins (40) are configured in the locking step.

39. The method of claim 33, wherein the step of automatically relocking the pins (40) is performed without operator intervention.

40. The method of claim 33, wherein the step of automatically relocking the pins (40) occurs no more than three seconds after the pins (40) are unlocked.

41. The method of claim 33, wherein the workpieces are circuit boards.

42. The method of claim 33, wherein the locking and relocking of the pins (40) is triggered by a host machine device that is involved in the manufacture of the workpieces.

43. The method of claim 42, wherein the workpieces are circuit boards and the host machine is a solder paste printer, a pick and place machine, a milling machine, a board clamp device or a drill press.

44. The method of claim 43, wherein the pins (40) conformably support the first and second workpieces.

45. The method of claim 33, wherein the locking, unlocking and relocking of the pins (40) is triggered by a sensing mechanism (98).

46. The method of claim 33, wherein the locking and unlocking steps are performed automatically.

## Patentansprüche

1. Stiftarretier-Vorrichtung, welche umfasst:
ein Gehäuse mit mindestens einer Stiftbohrung (21), worin die mindestens eine Stiftbohrung (21) ein inneres und ein äußeres Ende aufweist, worin mindestens eine Stiftöffnung (14), die fluid mit dem äußeren Ende der mindestens einen Stiftbohrung (21) verbunden ist, und kleiner Abmessungen aufweist als die mindestens eine Stiftbohrung (21), mindestens einen Stifteinstellkanal (31, 331, 431, 531), der fluid mit dem inneren Ende der mindestens einen Stiftbohrung (21) verbunden ist, mindestens eine Sperrbohrung (12), und mindestens einen Stiftsperrkanal (13, 313, 413, 513), der fluid mit der mindestens einen Sperrbohrung (12) verbunden ist,
mindestens einen Stift (40) mit einem Kolben (42) und einem Schaft (41), worin der Kolben (42) in der mindestens einen Stiftbohrung (21) enthalten ist und worin der Schaft (41) in der entsprechenden Stiftöffnung (14) gleitend enthalten ist, um von der Stiftöffnung (14) durch Anlegen eines pneumatischen Drucks in dem mindestens einen Stifteinstellkanal (31, 331, 431, 531) erstreckbar zu sein, und
mindestens einen Sperrkolben (11), der in der mindestens einen Sperrbohrung (12) gleitend enthalten ist und mittels pneumatischen Drucks in der mindestens einen Sperrbohrung (12) betätigt wird, um auf den mindestens einen Stift (40) eine Sperrkraft auszuüben,
worin der mindestens eine Sperrkolben (11), die mindestens eine Sperrbohrung (12) und der mindestens eine Stiftsperrkanal (13, 313, 413, 513) in einer Sperrplatte (10) enthalten sind, welche die mindestens eine Stiftöffnung (14) ausgerichtet mit der mindestens einen Stiftbohrung (21) aufweist.

2. Vorrichtung nach Anspruch 1, worin die mindestens eine Stiftbohrung (21) in einem Zylinderblock (20) enthalten ist

3. Vorrichtung nach Anspruch 1, worin der mindestens eine Stifteinstellkanal (31, 331, 431, 531) in einer Bodenplatte (30) enthalten ist.

4. Vorrichtung nach Anspruch 1, worin die mindestens eine Stiftbohrung (21) in einem Zylinderblock (20) enthalten ist, und der mindestens eine Stifteinstellkanal (31, 331, 431, 531) in einer Bodenplatte (30) enthalten ist.

5. Vorrichtung nach Anspruch 4, worin die Sperrplatte (10), der Zylinderblock (20) und die 30 getrennte Teile sind, die miteinander aufgebaut werden.

6. Vorrichtung nach Anspruch 4, worin die Sperrplatte (10), der Zylinderblock (20) und die Bodenplatte (30) aus einem einzigen Materialstück gefertigt sind.

7. Vorrichtung nach Anspruch 1, worin der mindestens eine Sperrkolben (11) eine O-Ring-Dichtung (15) umfasst.

8. Vorrichtung nach Anspruch 1, worin der Kolben (42) einen größeren Durchmesser aufweist, als die Welle (41).

9. Vorrichtung nach Anspruch 1, worin der mindestens eine Stift (40) eine Kappe (43) aus einem Material aufweist, das weicher ist als das desSchafts (41).

10. Vorrichtung nach Anspruch 1, worin der mindestens eine Sperrkolben (11) eine Sperrposition zum Arretieren des mindestens einen Stifts (40) in einer gewünschten Höhe, und eine Entsperrpositionaufweist, und worin der mindestens eine Sperrkolben (11) mit dem mindestens einen Stift (40) in der Sperrposition in Eingriff steht und in der Entsperrposition entfernt ist von dem mindestens einen Stift (40).

11. Vorrichtung nach Anspruch 1, worin das Gehäuse mehrere Sperrbohrungen (12) aufweist, die die mindestens eine Sperrbohrung (12) beinhalten, und mehrere Stiftbohrungen (21), die die mindestens eine Stiftbohrung (21) beinhalten, und umfasst:
mehrere Stifte (40), die in jeweils den mehreren Stiftbohrungen (21) gleitend enthalten sind, worin jeder Stift (40) mittels eines pneumatischen Drucks in der entsprechenden Stiftbohrung (21) positioniert wird, und
mehrere Sperrkolben (11), die jeweils gleitend in einer entsprechenden Sperrbohrung (12) enthalten sind, worin jeder Sperrkolben (11) mittels eines pneumatischen Drucks in der entsprechenden Sperrbohrung (12) betätigt wird, um eine Sperrkraft auf den entsprechenden Stift (40) in der Sperrbohrung (12) auszuüben.

12. Vorrichtung nach Anspruch 1, worin der mindestens eine Stiftsperrkanal (13, 313, 413, 513) fluid verbunden ist, um Druck oder Unterdruck auf die Sperrbohrungen (12) auszuüben, und worin der mindestens eine Stifteinstellkanal (31, 331, 431, 531) fluid verbunden ist, um Druck oder Unterdruck auf die Stiftbohrungen (21) auszuüben.

13. Vorrichtung nach Anspruch 12, welche weiter umfasst:
eine erste äußere Luftleitung (301), die mit jedem Stiftsperrkanal (313) fluid verbunden ist, und eine zweite äußere Luftleitung (302), die mit jedem Stifteinstellkanal (331) fluid verbunden ist.

14. Vorrichtung nach Anspruch 12, worin der mindestens eine Stiftsperrkanal (413, 513) und der mindestens eine Stifteinstellkanal (431, 531) in der Stiftarretier-Vorrichtung enthalten sind.

15. Vorrichtung nach Anspruch 14, worin der mindestens eine Stiftsperrkanal (413) in einer Sperrplatte (10) enthalten ist, und der mindestens eine Stifteinstellkanal (431) inder Basisplatte (30) enthalten ist.

16. Vorrichtung nach Anspruch 12, welche weiter umfasst:
Luftverbindungsmittel (32) zur Verbindung des mindestens einen Stiftsperrkanals (13, 313, 413, 513) mit einer pneumatischen Einrichtung.

17. Vorrichtung nach Anspruch 14, worin die Stiftarretier-Vorrichtungmindestens zwei Reihen von Stiften (40) mit gegenüberliegenden Sperrkolben (11)umfasst.

18. Vorrichtung nach Anspruch 12, welche weiter umfasst:
eine pneumatische Einrichtung, worin die pneumatische Einrichtung (60) mit einer oder beiden des mindestens einen Stiftsperrkanals (13, 313, 413, 513) und des mindestens einen Stifteinstellkanals (31, 331, 431, 531) fluid verbunden ist.

19. Vorrichtung nach Anspruch 18, worin die pneumatische Einrichtung (60) Druck und/oder Unterdruck zu einer oder beiden des mindestens einen Stiftsperrkanals (13, 313, 413, 513) und des mindestens einen Stifteinstellkanals (31, 331, 431, 531) liefert, um die Sperrkolben (11) zu sperren und zu entsperren.

20. Vorrichtung nach Anspruch 12, welche weiter umfasst:
erste und zweite pneumatische Einrichtungen (60), worin die erste pneumatische Einrichtung (60) fluid mit dem mindestens einen Stiftsperrkanal (13, 313, 413, 513) verbunden ist, und worin die zweite pneumatische Einrichtung (60) mit dem mindestens einen Stifteinstellkanal (31, 331, 431, 531) fluid verbunden ist.

21. Vorrichtung nach Anspruch 19, worin die pneumatische Einrichtung (60) mittels eins programmierbaren Controllers (80) gesteuert wird.

22. Vorrichtung nach Anspruch 19, worin die pneumatische Einrichtung (60) manuell gesteuert wird.

23. System zum Einstellen, Entsperren und/oder Rücksetzen von Stiften (40) von mindestens einer Stiftarretier-Vorrichtung (96) zur Verwendung bei der Herstellung eines Werkstücks, welches umfasst:
mindestens eine Stiftarretier-Vorrichtung (96) nach einem der Ansprüche 1 bis 22, und
ein Moderationsgerät, das ein Signal zu der mindestens einen Stiftarretier-Vorrichtung (96) liefert, um das automatische Einstellen und Rückstellen der Stifte (40) der mindestens einen Stiftarretier-Vorrichtung (96) zu erleichtern.

24. System nach Anspruch 23, worin das Signal des Moderationsgeräts zu der Stiftarretier-Vorrichtung (96) über einen Controller geliefert wird.

25. System nach Anspruch 23, worin das Signal von dem Moderationsgerät zu der mindestens einen Stiftarretier-Vorrichtung (96) über einen programmierbaren Controller geliefert wird.

26. System nach Anspruch 23, worin das Werkstück eine Schaltplatte ist und das Moderationsgerät ein Lötpastendrucker, eine Aufnahme- und PositionierungsMaschine, eine Fräsmaschine, eine Platten-Aufnabmeeinrichtung oder eine Bohrpresse.

27. System nach Anspruch 23, welches weiter umfasst:
ein Werkstück, das von den Stiften (40) der mindestens einen Stiftarretier-Vorrichtung (96) getragen wird, und worin die Stifte (40) dermindestens einen Stiftarretier-Vorrichtung (96) das Werkstück winkelgetreu tragen.

28. System zum Einstellen, Entsperren und/oder Rückstellen von Stiften (40) von mindestens einer Stiftarretier-Vorrichtung (96) zur Verwendung bei der Herstellung eines Werkstücks, welches umfasst:
mindestens eine Stiftarretier-Vorrichtung (96)nach einem der Ansprüche 1 bis 23, und
einen Controller (80), der die Stifte (40) der mindestens einen Stiftarretier-Vorrichtung (96) automatisch einstellen und rückstellen kann.

29. System nach Anspruch 28, welches weiter umfasst:
einen Erfassungsmechanismus (98), worin der Erfassungsmechanismus (98) den Controller (80) dazu veranlasst, die Stifte (40) zu setzen, zu sperren und/oder rückzusetzen.

30. System nach Anspruch 29, worin der Erfassungsmechanismus (98) aus einem oder mehreren optischen Sensoren oder einem Drucksensor besteht.

31. System nach Anspruch 28, welches weiter umfasst:
Eine manuelle Eingabeeinrichtung (99), worin die manuelle Eingabeeinrichtung (99) den Controller (80) dazu bringt, die Stifte (40) zu setzen, zu sperren und/oder rückzusetzen.

32. System nach Anspruch 28, welches weiter umfasst:
eine pneumatische Einrichtung, die mit dem Controller (80) verbunden ist.

33. Verfahren zum Positionieren, Sperren, Entsperren und Rücksetzen von Stiften (40) von mindestens einer Stiftarretier-Vorrichtung (96)nach einem der Ansprüche 1 bis 22, welches die Schritte umfasst:
Anlegen eines ersten Fluiddrucks, um die Stifte (40)der mindestens einenStiftarretier-Vorrichtung (96) von einer Startposition auf eine gewünschte Position anzuheben, um ein erstes Werkstück in einer gewünschten Position zu tragen,
**gekennzeichnet durch**,
Anlegen eines pneumatischen Drucks, um die Sperrkolben (11), die mit den Stiften (40) im Eingriff stehen und diese in einer gewünschten Position sperren, zu bewegen,
Durchführen der Aufgabe an dem getragenen ersten Werkstück, und
Halten des an die Sperrkolben (11) angelegten pneumatischen Drucks bis die Aufgabe an dem ersten Werkstück beendet ist.

34. Verfahren nach Anspruch 33, welches die Schritte umfasst:
Anlegen von Drucküber Stiftsperrkanäle (13, 313, 413, 513), um die Stifte (40) zu heben und von Unterdruck, um die Stifte (40) abzusenken,
Anlegen von Drucküber Stiftsperrkanäle (13, 313, 413, 513), um die Sperrkolben (11) zu bewegen und von Unterdruck, um die Sperrkolben (11) zurückzuziehen.

35. Verfahren nach Anspruch 34, wobei jeder Schritt mittels einer pneumatischen Einrichtung (60)durchgeführt wird.

36. Verfahren nach Anspruch 35, wobei die pneumatische Einrichtung (60) über einen progammierbarenController (80)automatisch gesteuert wird.

37. Verfahren nach Anspruch 35, wobei die pneumatische Einrichtung (60) manuell gesteuert wird.

38. Verfahren nach Anspruch 33, wobei der Schritt des Anlegens eines pneumatischen Drucks zur Bewegung der Sperrkolben (11) die Stifte (40) sperrt, um das erste Werkstück zu sichern, und weiter die Schritte umfasst:
Entsperren der Stifte (40), während sie in der gewünschten Position sind,
Zurückbringen der Stifte (40) in die Ausgangsposition,
Rücksetzen der Stifte (40), um ein zweites Werkstück zu sichern, und
automatisches erneutes Sperren der Stifte (40), um das zweite Werkstück zu sichern, wobei die Stifte (40) in dem Rückstellschritt in eine Konfiguration rückstellbar sind, die verschieden ist von der, in der die Stifte (40) in dem Sperrschritt konfiguriert sind.

39. Verfahren nach Anspruch 33, wobei der Schritt des automatischen erneuten Sperrens der Stifte (40) ohne Intervention des Betreibers erfolgt.

40. Verfahren nach Anspruch 33, wobei der Schritt des automatischen erneuten Sperrens der Stifte (40) nicht mehr als drei Sekunden nachdem die Stifte (40) entsperrt sind, erfolgt.

41. Verfahren nach Anspruch 33, wobei das Werkstück Schaltplatinen sind.

42. Verfahren nach Anspruch 33, wobei das Sperren und Entsperren der Stifte (40) durch ein Moderationsgerät ausgelöst wird, das bei derHerstellung der Werkstücke beteiligt ist.

43. Verfahren nach Anspruch 42, wobei die Werkstücke Schaltplatten sind und das Moderationsgerät ein Lötpastendrucker, eine Aufnahme- und PositionierungsMaschine, eine Fräsmaschine, eine Platten-Aufnahmeeinrichtung oder eine Bohrpresse ist.

44. Verfahren nach Anspruch 43, wobei die Stifte (40) die ersten und zweiten Werkstücke winkelteu tragen.

45. Verfahren nach Anspruch 33, wobei das Sperren, Entsperren und erneute Sperren der Stifte (40) durch einen Erfassungsmechanismus (98) ausgelöst wird.

46. Verfahren nach Anspruch 33, wobei die Sperr- und Entsperrschritte automatisch durchgeführtwerden.

## Revendications

1. Appareil de verrouillage de goupille, comprenant :
un logement ayant au moins un alésage de goupille (21), le au moins un alésage de goupille (21) ayant une extrémité interne et une extrémité externe, au moins une ouverture de goupille (14) raccordée fluidiquement à l'extrémité externe du au moins un alésage de goupille (21) et étant de taille plus petite que le au moins un alésage de goupille (21), au moins un canal d'ajustement de goupille (31 ; 331 ; 431 ; 531) raccordé fluidiquement à l'extrémité interne du au moins un alésage de goupille (21), au moins un alésage de verrouillage (12), et au moins un canal de verrouillage de goupille (13 ; 313 ; 413 ; 513) raccordé fluidiquement au au moins un alésage de verrouillage (12) ;
au moins une goupille (40) comprenant un piston (42) et un arbre (41), le piston (42) étant contenu avec faculté de coulissement à l'intérieur du au moins un alésage de goupille (21) et l'arbre (41) étant reçu avec faculté de coulissement dans l'ouverture de goupille respective (14) pour pouvoir s'étendre depuis l'ouverture de goupille (14) par l'application d'une pression pneumatique dans le au moins un canal d'ajustement de goupille (31 ; 331 ; 431 ; 531) ; et
au moins un piston de verrouillage (11) contenu avec faculté de coulissement à l'intérieur du au moins un alésage de verrouillage (12) et actionné par une pression pneumatique dans le au moins un alésage de verrouillage (12) pour appliquer une force de verrouillage sur la au moins une goupille (40) ;
dans lequel le au moins un piston de verrouillage (11), le au moins un alésage de verrouillage (12) et le au moins un canal de verrouillage de goupille (13 ; 313 ; 413 ; 513) sont contenus dans une plaque de verrouillage (10) qui comprend la au moins une ouverture de goupille (14) alignée avec le au moins un alésage de goupille (21).

2. Appareil selon la revendication 1, dans lequel le au moins un alésage de goupille (21) est contenu à l'intérieur d'un bloc-cylindres (20).

3. Appareil selon la revendication 1, dans lequel le au moins un canal d'ajustement de goupille (31 ; 331 ; 431 ; 531) est contenu à l'intérieur d'une plaque de fond (30).

4. Appareil selon la revendication 1, dans lequel le au moins un alésage de goupille (21) est contenu à l'intérieur d'un bloc-cylindres (20), et le au moins un canal d'ajustement de goupille (31 ; 331 ; 431 ; 531) est contenu à l'intérieur d'une plaque de fond (30).

5. Appareil selon la revendication 4, dans lequel la plaque de verrouillage (10), le bloc-cylindres (20) et la plaque de fond (30) sont des pièces séparées qui sont assemblées ensemble.

6. Appareil selon la revendication 4, dans lequel la plaque de verrouillage (10), le bloc-cylindres (20) et la plaque de fond (30) sont formés à partir d'une pièce unique de matériau.

7. Appareil selon la revendication 1, dans lequel le au moins piston de verrouillage (11) comprend un joint torique (15).

8. Appareil selon la revendication 1, dans lequel le piston (42) a un diamètre plus grand que l'arbre (41).

9. Appareil selon la revendication 1, dans lequel la au moins une goupille (40) a une coiffe (43) constituée d'un matériau plus souple que l'arbre (41).

10. Appareil selon la revendication 1, dans lequel le au moins un piston de verrouillage (11) a une position de verrouillage permettant de verrouiller la au moins une goupille (40) à une hauteur souhaitée et une position de déverrouillage, et le au moins un piston de verrouillage (11) enclenche la au moins une goupille (40) dans la position de verrouillage et est éloigné de la au moins une goupille (40) dans la position de déverrouillage.

11. Appareil selon la revendication 1, dans lequel le logement a une pluralité d'alésages de verrouillage (12) qui comprend le au moins un alésage de verrouillage (12), et une pluralité d'alésages de goupille (21) qui comprend le au moins un alésage de goupille (21), et comprenant :
une pluralité de goupilles (40) contenue avec faculté de coulissement à l'intérieur des alésages respectifs de la pluralité d'alésages de goupille (21), chaque goupille (40) étant positionnée par l'application d'une pression pneumatique dans l'alésage de goupille correspondant (21) ; et
une pluralité de pistons de verrouillage (11), chacun étant contenu avec faculté de coulissement à l'intérieur d'un alésage de verrouillage respectif (12), chaque piston de verrouillage (11) étant actionné par une pression pneumatique dans l'alésage de verrouillage correspondant (12) pour appliquer une force de verrouillage sur la goupille correspondante (40) dans cet alésage de verrouillage (12).

12. Appareil selon la revendication 11, dans lequel le au moins un canal de verrouillage de goupille (13 ; 313 ; 413 ; 513) est raccordé fluidiquement pour appliquer une pression ou un vide aux alésages de verrouillage (12), et le au moins un canal d'ajustement de goupille (31 ; 331 ; 431 ; 531) est raccordé fluidiquement pour appliquer une pression ou un vide aux alésages de goupille (21).

13. Appareil selon la revendication 12, comprenant en outre :
un premier conduit d'air externe (301) raccordé fluidiquement à chaque canal de verrouillage de goupille (313) et un second conduit d'air externe (302) raccordé fluidiquement à chaque canal d'ajustement de goupille (331).

14. Appareil selon la revendication 12, dans lequel le au moins un canal de verrouillage de goupille (413 ; 513) et le au moins un canal d'ajustement de goupille (431 ; 531) sont renfermés à l'intérieur de l'appareil de verrouillage de goupille.

15. Appareil selon la revendication 14, dans lequel le au moins un canal de verrouillage de goupille (413) est renfermé à l'intérieur d'une plaque de verrouillage (10), et le au moins un canal d'ajustement de goupille (431) est renfermé à l'intérieur d'une plaque de base (30).

16. Appareil selon la revendication 12, comprenant en outre :
un moyen de raccordement à air (32) permettant de raccorder le au moins un canal de verrouillage de goupille (13 ; 313 ; 413 ; 513) à un dispositif pneumatique.

17. Appareil selon la revendication 14, dans lequel l'appareil de verrouillage de goupille comprend au moins deux rangées de goupilles (40) avec des pistons de verrouillage (11) opposés.

18. Appareil selon la revendication 12, comprenant en outre :
un dispositif pneumatique (60), dans lequel le dispositif pneumatique (60) est raccordé fluidiquement à l'un du au moins un canal de verrouillage de goupille (13 ; 313 ; 413 ; 513) et du au moins un canal d'ajustement de goupille (31 ; 331 ; 431 ; 531) ou aux deux.

19. Appareil selon la revendication 18, dans lequel le dispositif pneumatique (60) fournit l'un d'une pression ou d'un vide ou les deux à l'un du au moins un canal de verrouillage de goupille (13 ; 313 ; 413 ; 513) et du au moins un canal d'ajustement de goupille (31 ; 331 ; 431 ; 531) ou aux deux afin de verrouiller et de déverrouiller le piston de verrouillage (11).

20. Appareil selon la revendication 12, comprenant en outre :
des premier et second dispositifs pneumatiques (60), le premier dispositif pneumatique (60) étant raccordé fluidiquement au au moins un canal de verrouillage de goupille (13 ; 313 ; 413 ; 513) et le second dispositif pneumatique (60) étant raccordé fluidiquement au au moins un canal d'ajustement de goupille (31 ; 331 ; 431 ; 531).

21. Appareil selon la revendication 19, dans lequel le dispositif pneumatique (60) est commandé par une unité de commande programmable (80).

22. Appareil selon la revendication 19, dans lequel le dispositif pneumatique (60) est commandé manuellement.

23. Système de calage, déverrouillage et/ou recalage de goupilles (40) d'au moins un appareil de verrouillage de goupille (96) destiné à être utilisé dans la fabrication d'une pièce de fabrication, comprenant :
au moins un appareil de verrouillage de goupille (96) de l'une quelconque des revendications 1 à 22 ; et
une machine hôte qui fournit un signal au au moins un appareil de verrouillage de goupille (96) pour faciliter le calage et le recalage automatiques des goupilles (40) du au moins un appareil de verrouillage de goupille (96).

24. Système selon la revendication 23, dans lequel le signal provenant de la machine hôte est fourni au au moins un appareil de verrouillage de goupille (96) via une unité de commande (80).

25. Système selon la revendication 23, dans lequel le signal provenant de la machine hôte est fourni au au moins un appareil de verrouillage de goupille (96) via une unité de commande programmable (80).

26. Système selon la revendication 23, dans lequel la pièce de fabrication est une carte de circuit imprimé et la machine hôte est une imprimante de pâte à braser, une machine bras-transfert, une machine à fraiser, un dispositif serre-carte ou une perceuse à colonne.

27. Système selon la revendication 23, comprenant en outre :
une pièce de fabrication supportée par les goupilles (40) du au moins un appareil de verrouillage de goupille (96) ; et
dans lequel les goupilles (40) du au moins un appareil de verrouillage de goupille (96) supportent en concordance la pièce de fabrication.

28. Système de réglage, de déverrouillage et/ou de recalage de goupilles (40) d'au moins un appareil de verrouillage de goupille (96) destiné à être utilisé dans la fabrication d'une pièce de fabrication, comprenant :
au moins un appareil de verrouillage de goupille (96) de l'une quelconque des revendications 1 à 22 ; et
une unité de commande (80) qui est capable de caler et de recaler automatiquement les goupilles (40) du au moins un appareil de verrouillage de goupille (96).

29. Système selon la revendication 28, comprenant en outre :
un mécanisme de détection (98), dans lequel le mécanisme de détection (98) déclenche l'unité de commande (80) pour qu'elle cale, déverrouille et/ou recale les goupilles (40).

30. Système selon la revendication 29, dans lequel le mécanisme de détection (98) est un ou plusieurs parmi un capteur optique ou un capteur de pression.

31. Système selon la revendication 28, comprenant en outre :
un dispositif d'entrée manuel (99), dans lequel le dispositif d'entrée manuel (99) déclenche l'unité de commande (80) pour qu'elle cale, déverrouille et/ou recale les goupilles (40).

32. Système selon la revendication 28, comprenant en outre :
un dispositif pneumatique qui est raccordé à l'unité de commande (80).

33. Procédé de positionnement, verrouillage, déverrouillage et recalage de goupilles (40) d'au moins un appareil de verrouillage de goupille (96) de l'une quelconque des revendications 1 à 22, comprenant les étapes de :
application d'une première pression de fluide pour relever les goupilles (40) d'au moins un appareil de verrouillage de goupille (96) d'une position de départ à une position souhaitée pour supporter une première pièce de fabrication à une position souhaitée ;
**caractérisé par** :
l'application d'une pression pneumatique pour déplacer des pistons de verrouillage (11) qui enclenchent et verrouillent les goupilles (40) à la position souhaitée ;
la réalisation d'une tâche sur la première pièce de fabrication supportée ; et
le maintien de la pression pneumatique appliquée aux pistons de verrouillage (11) jusqu'à ce que la tâche réalisée sur la première pièce de fabrication soit achevée.

34. Procédé selon la revendication 33, comprenant les étapes de :
application d'une pression pour relever et d'un vide pour rétracter les goupilles (40) à travers les canaux d'ajustement de goupille (31 ; 331 ; 431 ; 531) ; et
application d'une pression pour déplacer et d'un vide pour désenclencher les pistons de verrouillage (11) à travers des canaux de verrouillage de goupille (13 ; 313 ; 413 ; 513).

35. Procédé selon la revendication 34, dans lequel chaque étape est effectuée par un dispositif pneumatique (60).

36. Procédé selon la revendication 35, dans lequel le dispositif pneumatique (60) est commandé automatiquement via une unité de commande programmable (80).

37. Procédé selon la revendication 35, dans lequel le dispositif pneumatique (60) est commandé manuellement.

38. Procédé selon la revendication 33, dans lequel l'étape d'application d'une pression pneumatique pour déplacer les pistons de verrouillage (11) verrouille les goupilles (40) pour arrimer la première pièce de fabrication, et comprenant en outre les étapes de :
déverrouillage des goupilles (40), pendant qu'elles sont dans la position souhaitée ;
retour des goupilles (40) à la position de départ ;
recalage des goupilles (40) pour arrimer une seconde pièce de fabrication ; et
reverrouillage automatique des goupilles (40) pour arrimer la seconde pièce de fabrication, où les goupilles (40) peuvent être recalées dans une configuration différente à l'étape de recalage de celle où les goupilles (40) sont configurées à l'étape de verrouillage.

39. Procédé selon la revendication 33, dans lequel l'étape de reverrouillage automatique des goupilles (40) est effectuée sans intervention d'un opérateur.

40. Procédé selon la revendication 33, dans lequel l'étape de reverrouillage automatique des goupilles (40) se produit pas plus de trois secondes après le déverrouillage des goupilles (40).

41. Procédé selon la revendication 33, dans lequel les pièces de fabrication sont des cartes de circuit imprimé.

42. Procédé selon la revendication 33, dans lequel le verrouillage et le reverrouillage des goupilles (40) sont déclenchés par un dispositif de machine hôte qui est impliqué dans la fabrication des pièces de fabrication.

43. Procédé selon la revendication 42, dans lequel les pièces de fabrication sont des cartes de circuit imprimé et la machine hôte est une imprimante de pâte à braser, une machine bras-transfert, une machine à fraiser, un dispositif serre-carte ou une perceuse à colonne.

44. Procédé selon la revendication 43, dans lequel les goupilles (40) supportent en concordance les première et seconde pièces de fabrication.

45. Procédé selon la revendication 33, dans lequel le verrouillage, le déverrouillage et le reverrouillage des goupilles (40) sont déclenchés par un mécanisme de détection (98).

46. Procédé selon la revendication 33, dans lequel les étapes de verrouillage et de déverrouillage sont effectuées automatiquement.
